# EUROPÄISCHE PATENTSCHRIFT

(11) **EP 0 460 377 B1**
(45) Veröffentlichungstag und Bekanntmachung des Hinweises auf die Patenterteilung: **12.10.1994**
(21) Anmeldenummer: 91105536.6
(22) Anmeldetag: 08.04.1991
(51) Int. Cl.: B60T 17/22, F16D 66/02, F16D 65/60

(54) **Bremsbetätigungseinrichtung mit einer Einrichtung zum Nachstellen einer Bremse**
Brake actuating device with brake adjusting means
Dispositif de commande de frein à dispositif pour ajuster un frein

(30) Priorität: 05.06.1990 DE 4017952
(43) Veröffentlichungstag der Anmeldung: 11.12.1991
(73) Patentinhaber: WABCO GmbH, 30453 Hannover (DE)
(72) Erfinder: Frania, Josef, W-3000 Hannover (DE)
(74) Vertreter: Schrödter, Manfred, Dipl.-Ing.

(56) Entgegenhaltungen:
- EP-A- 0 030 766
- EP-A- 0 370 173
- DE-A- 1 600 223
- DE-A- 3 343 885
- DE-B- 1 480 038
- DE-B- 2 116 121

## Beschreibung

Die Erfindung betrifft eine Bremsbetätigungseinrichtung mit einer Einrichtung zum Nachstellen einer Bremse, insbesondere einer Fahrzeugbremse, gemäß dem Oberbegriff des Patentanspruchs 1.

Eine derartige Einrichtung ist durch die DE-PS 1 480 038 vorbekannt. Die vorbekannte Einrichtung weist eine Nachstelleinrichtung auf, mit der Teile eines Bremsgestänges, nämlich eine Bremswelle und ein darauf angeordneter Bremshebel gegeneinander verstellbar sind. Die Verstellung dient einer kontinuierlichen Nachjustierung des Bremsgestänges im Sinne einer Aufrechterhaltung eines vorgegebenen Bremslüftspiels. Diese Nachjustierung soll ein gleichbleibendes Ansprechverhalten der Bremsen bzw. Bremsverhalten gewährleisten, was nicht zuletzt aus Gründen der Fahrsicherheit Gegenstand entsprechender gesetzlicher Regelungen ist.

Verschleiß oder Defekte der Nachstelleinrichtung und deren Betätigungsmechanismus können jedoch ein fehlerhaftes Nachjustieren bewirken, mit der Folge, daß das durch den Bremsentyp vorgegebene Bremslüftspiel im Verlaufe des Fahrbetriebes nicht mehr aufrecht erhalten bleibt und dann nicht mehr dem tatsächlichen Bremsbelagverschleiß entspricht. Bei der vorbekannten Einrichtung ist eine fehlerhafte Nachjustierung, oder das gänzliche Ausbleiben einer solchen, nur durch einen sich verändernden Bremsbetätigungshub oder ein Nachlassen der Bremswirkung erkennbar. Diese unerwünschte Veränderung des Bremslüftspiels vollzieht sich jedoch nur allmählich und gewöhnlich über einen längeren Zeitabschnitt und ist daher anfänglich kaum wahrnehmbar. Aus Sicherheitsgründen besteht daher das Bedürfnis, dem Betreiber die Gewißheit über den tatsächlichen Zustand des vorhandenen Bremslüftspiels und des Verschleißes des Bremsbelages zu erhalten.

Der Erfindung liegt die Aufgabe zugrunde, eine Bremsbetätigungseinrichtung der eingangs erwähnten Art mit einfachen Mitteln so zu verbessern, daß deren Bremsbelagverschleiß erfaßbar ist.

Diese Aufgabe wird durch die im Patentanspruch 1 angegebene Erfindung gelöst. Weiterbildungen und vorteilhafte Ausgestaltungen der Erfindung sind in den Unteransprüchen angegeben.

Die Erfindung läßt sich kostengünstig unter Verwendung eines handelsüblichen fühlergesteuerten Wegsensors, wie er beispielsweise in der DE 33 43 885 A1 beschrieben ist, ausführen.

Die Erfindung eröffnet die Möglichkeit, den Zustand bzw. das Betriebsverhalten der Bremseinrichtung in ein elektronisches Diagnosesystem, sei es werkstattgebunden, sei es im Falle eines Fahrzeugs bordeigen, einzubeziehen.

Die Erfindung läßt sich mit jedem geeigneten Bremshebel, unabhängig von der Art des auf ihm wirkenden Betätigungsmechanismus, ausführen. Nur beispielhaft seinen hierfür mit Druckluft oder Bremsflüssigkeit betätigbare Bremszylinder genannt.

Die Erfindung erhöht die aktive Sicherheit der zugehörigen Bremsanlage, was insbesondere bei Fahrzeugen vorteilhaft ist. Dies gilt insbesondere, wenn die Nachstelleinrichtung im Bremshebel angeordnet ist und daher ihre visuelle Überwachung kaum möglich ist.

Ein weiterer Vorteil der Erfindung besteht in ihrer weiteren Ausbildung durch eine Verbindung der Überwachungseinrichtung mit Funktionselementen des Bremshebels und einer dadurch erreichten Kapselung gegen am Fahrzeug herrschende Umwelteinflüsse.

Weitere Vorteile der Erfindung werden in der nachstehenden Erläuterung anhand eines in der Zeichnung dargestellten Ausführungsbeispiels beschrieben.

Die Erfindung wird anhand eines Ausführungsbeispiels, das in der Zeichnung dargestellt ist, näher erläutert.

Es zeigen.
- **Fig.1**: eine Bremsbetätigungseinrichtung mit einer Einrichtung zur Überwachung des Bremsbelagverschleißes,
- **Fig.2**: eine Einzelheit der Einrichtung gemäß Fig.1,
- **Fig.3**: eine Einzelheit einer Variante der Einrichtung gemäß Fig.1 und Fig.2.

Die dargestellte Einrichtung ist dafür vorgesehen, die Funktion der Nachstelleinrichtung zwecks Aufrechterhaltung eines annähernd konstanten Bremslüftspiels sowie den Bremsbelagverschleiß zu überwachen.

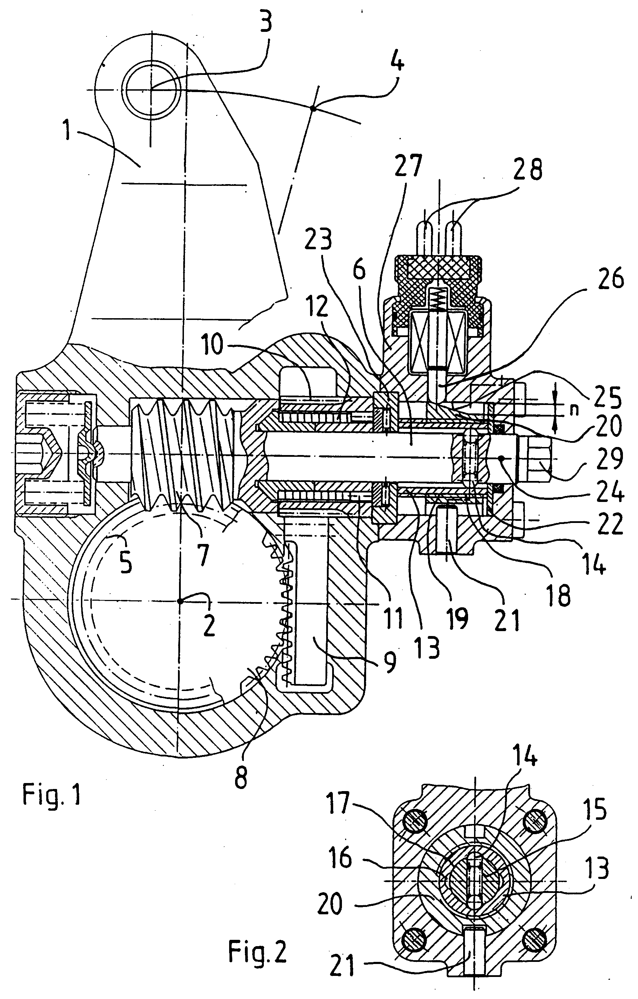

Die Bremsbetätigungseinrichtung umfaßt gemäß Fig.1 einen Bremshebel (1), der auf einer Bremsbetätigungswelle (2) angeordnet ist, sowie ein nicht dargestelltes Betätigungsorgan, wie z.B. einen durch ein Druckmittel betätigbaren Bremszylinder, mit dem der Bremshebel (1) mit der Bremsbetätigungswelle (2) um die Drehachse der Bremsbetätigungswelle (2) verschwenkbar ist. Der bei der Verschwenkung vom Bremshebel (1) durchfahrene Bremshebelausschlag zwischen einer vorgegebenen Anfangsstellung (3) und einer Endstellung (4) entspricht dem Durchfahren eines Lüftspiels der Bremselemente, wie z.B. Bremsbacken und Bremstrommel, bis zu deren Eingriff bei einer Bremsbetätigung.

Zwischen der Bremsbetätigungswelle (2) und dem Bremshebel (1) ist eine Nachstelleinrichtung (5, 7) in Form eines Getriebes mit einem Schneckenrad (5) und einer Schnecke (7) angeordnet. Um bei einem Verschleiß der Bremselemente dennoch ein vorgegebenes Bremslüftspiel aufrechtzuerhalten, ist die Bremsbetätigungswelle (2) gegenüber dem Bremshebel (1), dem Verschleiß entsprechend, durch die Nachstelleinrichtung (5, 7) verstellbar. Diese Verstellung bewirkt, daß der maximale Bremshebelausschlag bei einer Bremsbetätigung zwischen der Anfangsstellung (3) und der Endstellung (4) nahezu unverändert bleibt. Eine Abweichung hiervon in vorgegebenen Grenzen soll letztlich nur durch eine gewisse Elastizität des Bremsgestänges und durch eine unterschiedliche Erwärmung der Bremstrommel gegeben sein.

Die Nachstelleinrichtung (5, 7) ist durch einen Antrieb (8, 9, 10) betätigbar, der aus einem um die Bremsbetätigungswelle (2) und relativ zum Bremshebel (1) drehbar angeordneten Zahnrad (8), einer mit dem Zahnrad (8) in Eingriff befindlichen Zahnstange (9) und einem mit der Zahnstange (9) in Eingriff befindlichen Ritzel (10) gebildet ist. Zwischen dem Antrieb (8, 9, 10) und der Nachstelleinrichtung (5, 7) ist eine durch Anschläge (11) begrenzte Leerwegeinrichtung und eine Einwegkupplung (12) nach Art eines Freilaufs angeordnet.

Das Zahnrad (8) ist mit einem relativ zum Bremshebel (1) angeordneten Bezugspunkt verbunden, derart, daß bei einem Bremshebelausschlag durch eine Relativbewegung des Bremshebels (1) zum Zahnrad (8) die Zahnstange (9) und das Ritzel (10) in eine Antriebsbewegung relativ zu der Nachstelleinrichtung (5, 7) versetzt werden, wobei jedoch bei einer Drehbewegung des Ritzels (10) innerhalb der Anschläge (11) der Leerwegeinrichtung die Antriebsbewegung nicht über die Einwegkupplung (12) auf die Nachstelleinrichtung (5, 7) übertragen wird. Die Antriebsbewegung von Zahnstange (9) und Ritzel (10), bei der sich das Ritzel (10) zwischen den Anschlägen (11) der Leerwegeinrichtung bewegt, entspricht dem Bremshebelausschlag zwischen der Anfangsstellung (3) und der Endstellung (4), der einem vorgegebenen Bremslüftspiel zwischen den Bremsbacken und der Bremstrommel entsprechen soll.

Bei einem Defekt der vorstehend beschriebenen Nachstelleinrichtungen, d.h., wenn der durch den Fahrbetrieb auftretende Verschleiß der Bremselemente nicht durch ein Verstellen der Bremsbetätigungswelle (2) relativ zum Bremshebel (1) kompensiert wird, stellt sich bei Bremsbetätigungen ein Bremshebelausschlag ein, der die Endstellung (4) überschreitet.

Die Fig.1 zeigt die Bremsbetätigungseinrichtung mit dem Bremshebel (1) in Kombination mit einer Einrichtung zur Überwachung der Funktion der Nachstelleinrichtung (5, 7) wie sie beispielsweise in der DE 33 43 885 A1 beschrieben ist.

Die Schnecke (7) weist einen über das Gehäuse des Bremshebels (1) hinaus sich erstreckenden Fortsatz (6) auf. Eine den Fortsatz (6) umgreifende Buchs (13) ist mit diesem drehfest verbunden. Die drehfeste Verbindung erfolgt über ein zwischen dem Fortsatz (6) und der Buchse (13) wirksames Gesperre (14), das z.B. in der Art eines mittels einer Feder (15) vorgespannten Kugelgesperres (14) mit Rasten (16) ausgebildet ist, die in beliebiger Anzahl am Innendurchmesser (17) der Buchse (13) angeordnet sind.

Die Buchse (13) ist mit einem Außengewinde (18) versehen, das in Wirkverbindung mit einem Innengewinde (19) eines einen Meßweg (n) erzeugenden Bauteils (20) steht. Die Gewindeverbindung (18, 19) wirkt als Übertragungsmechanismus (18, 19) mit dem das Bauteil (20) entsprechend einer Drehbewegung der Schnecke (7), im Sinne einer Verstellbewegung der Nachstelleinrichtung (5, 7) bezüglich der Schnecke (7) längsbeweglich ist. Das Bauteil (20) ist gegen unbeabsichtigte Mitnahme auf der Buchse (13) durch einen gehäusefesten Stift (21) gesichert. Die Buchse (13) ist an ihren beiden Stirnseiten durch Stützlager (22, 23) gegen eine übermäßige Längsverschiebung bezüglich des Fortsatzes (6) gesichert. Das Bauteil (20) weist eine zu seiner Verschiebeachse (24) geneigte Steuerkurve (25) auf. Ein als Taststift (26) ausgebildeter Wegsensor (26) eines Signalgebers (27) befindet sich mit der Steuerkurve (25) in Eingriff. Die mittels des Signalgebers (27) erzeugbaren elektrischen Signale sind über elektrische Kontakte (28) einer Anzeige- bzw. Auswerteeinrichtung zuführbar.

Der Fortsatz (6) weist an seinem freien Ende eine Formgebung (29) auf, die zum Ansatz eines Schlüssels dient, mit der die Nachstelleinrichtung (5, 7) manuell verstellbar ist. Das Gesperre (14) dient in beiden Verstellrichtungen als Bruchsicherung, nachdem das Bauteil (20) durch Verstellung in den Endstellungen an den Stützlagern (22) oder (23) zur Anlage gekommen ist. Durch Überwinden des Gesperres (14) führt der Fortsatz (6) gegenüber der Buchse (13) und dem Bauteil (20) eine Relativbewegung aus.

Die Wirkungsweise dieser Einrichtung ist wie folgt:
Durch manuelle Verstellung der Nachstelleinrichtung (5, 7) wird der Bremshebel (1) in eine Ausgangsstellung (3) gebracht, in der bei vorgegebenem Bremslüftspiel die Steuerkurve (25) sich bezüglich des Wegsensors (26) am Beginn des Meßweges (n) befindet. Im Verlaufe des Fahrbetriebes wird die durch Verschleiß des Bremsbelages erfolgende erweiterte Verschwenkung des Bremshebels (1) in der zuvor beschriebenen Weise zur Verstellung der Nachstelleinrichtung (5, 7) genutzt. Die Verstellung der Nachstelleinrichtung (5, 7) wiederum bewirkt eine Relativbewegung der Steuerkurve (25) gegenüber dem Wegsensor (26). Die durch Abtasten der Steuerkurve (25) sich einstellende Position des Wegsensors (26) ist als elektrisches Signal über die Kontakte (28) einer Anzeige- bzw. Auswerteeinrichtung zuführbar, wo es als Grad des Bremsbelagverschleißes identifizierbar ist.

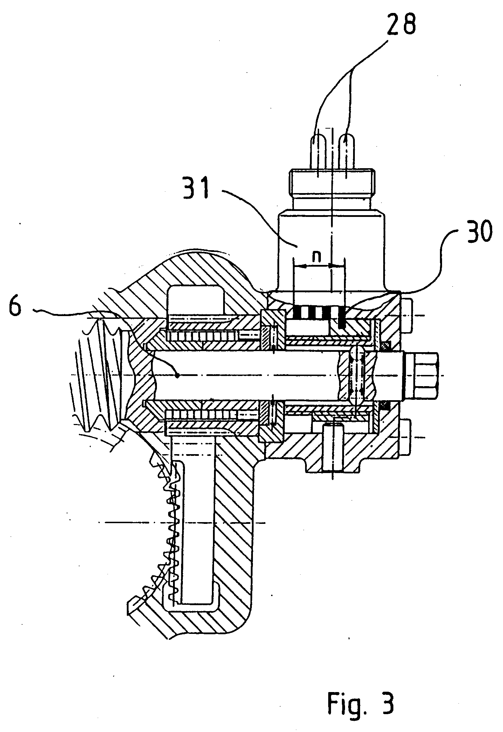

Wie aus der Fig.3 hervorgeht, kann die Nachstelleinrichtung (5, 7) oder damit bewegbare Bauteile, wie z.B. der Fortsatz (6), mit magnetfelderzeugenden oder magnetfeldverändernden Mitteln (30) versehen sein, deren Bewegung relativ zu einem Signalgeber (31) mit einem als Magnetfeldsensor (32) ausgebildeten Wegsensor (32) als Meßweg (n) registrierbar ist.

Die elektrischen Signale an den elektrischen Anschlüssen (28) des Signalgebers (27, 31) können zur Steuerung einer optischen oder akustischen Anzeigeeinrichtung im Fahrerhaus, oder zur Weiterleitung an eine elektrische Auswerteeinrichtung eines stationären Diagnosecenters, z.B. anläßlich einer Fahrzeuginspektion, vorteilhaft genutzt werden.

## Patentansprüche

1. Bremsbetätigungseinrichtung mit einer Einrichtung zum Nachstellen einer Bremse, insbesondere einer Fahrzeugbremse, mit folgenden Merkmalen:
a) es ist ein Bremshebel vorgesehen, der zusammen mit einer Bremswelle um deren Drehachse eine Schwenkbewegung ausführt, die zur Betätigung einer Bremse, im Sinne des Überwindens eines Bremslüftspiels zwecks Annäherung eines Bremsbelages an eine Bremstrommel, dient;
b) zwischen dem Bremshebel und der Bremswelle ist eine Nachstelleinrichtung vorgesehen, mit der die Bremswelle gegenüber dem Bremshebel um die Drehachse der Bremswelle, im Sinne der Aufrechterhaltung des Bremslüftspiels bei Verschleiß des Bremsbelages, verstellbar ist,
c) die Nachstelleinrichtung ist in der Art eines Getriebes, mit einem auf der Bremswelle drehfest angeordneten Schneckenrad und einer mit diesem in Eingriff befindlichen Schnecke, ausgebildet;
gekennzeichnet durch folgendes Merkmal:
d) es ist ein Signalgeber (27, 31) mit einem Wegsensor (26, 30) vorgesehen, der zum Abtasten eines mit der Nachstelleinrichtung (5, 7) erzeugbaren Meßweges (n) dient und in Abhängigkeit von dem abgetasteten Meßweg (n) ein Signal erzeugt.

2. Einrichtung nach Anspruch 1, dadurch gekennzeichnet, daß ein der Erzeugung des Meßweges (n) dienendes Bauteil (20, 33), vorgesehen ist, das mit der der Nachstelleinrichtung (5, 7) zugeordneten Schnecke (7) verstellbar ist.

3. Einrichtung nach Anspruch 2, dadurch gekennzeichnet, daß das Bauteil (20, 33) längsverschieblich bezüglich der Schnecke (7) angeordnet ist und der Meßweg (n) in Abhängigkeit von der Verstellbewegung der Schnecke (7) erzeugbar ist.

4. Einrichtung nach wenigstens einem der vorhergehenden Ansprüche 1 bis 3,
gekennzeichnet durch die folgenden Merkmale:
a) die Schnecke (7) ist in dem Bremshebel (1) angeordnet und weist einen einstückig oder drehfest mit der Schnecke (7) verbundenen Fortsatz (6) auf, der sich außerhalb des Bremshebels (1) erstreckt;
b) zwischen dem Fortsatz (6) und dem Bauteil (20, 33) ist ein Übertragungsmechanismus (18, 19) vorgesehen, der zur Übertragung der Verstellbewegung der Schnecke (7) auf das Bauteil (20, 33) dient.

5. Einrichtung nach den Ansprüchen 1 und 4, dadurch gekennzeichnet, daß der Wegsensor (26) des Signalgebers (27) als Taststift (26) ausgebildet ist, der sich mit einer zur Verschiebeachse (24) des Bauteils (20) geneigten Steuerkurve (25) im Eingriff befindet.

6. Einrichtung nach Anspruch 4, dadurch gekennzeichnet, daß der Übertragungsmechanismus (18, 19) aus einem Innengewinde (19) des Bauteils (20, 33) gebildet ist, das mit einem mit dem Fortsatz (6) drehfest verbundenen Außengewinde (18) im Eingriff befindlich ist.

7. Einrichtung nach Anspruch 6, dadurch gekennzeichnet, daß das dem Fortsatz (6) zugeordnete Außengewinde (18) auf einer dem Fortsatz (6) umgreifenden und mit diesem drehfest verbundenen Buchse (13) angeordnet ist.

8. Einrichtung nach Anspruch 7, dadurch gekennzeichnet, daß ein zwischen der Buchse (13) und dem Fortsatz (6) wirksames Rastgesperre (14) vorgesehen ist, mit dem die Buchse (13) und der Fortsatz (6) in beliebige Raststellungen zueinander bringbar sind.

9. Einrichtung nach Anspruch 1, dadurch gekennzeichnet, daß die Nachstelleinrichtung (5, 7) mit magnetfelderzeugenden oder magnetfeldverändernden Mitteln (30) versehen ist, deren Bewegung relativ zu einem Signalgeber (31) mit einem als Magnetfeldsensor (32) ausgebildeten Wegsensor (32) als Meßweg (n) registrierbar ist.

10. Einrichtung nach Anspruch 9, dadurch gekennzeichnet, daß die magnetfelderzeugenden oder magnetfeldverändernden Mittel (30) an dem Fortsatz (6) der Schnecke (7) angeordnet sind.

11. Einrichtung nach Anspruch 9, dadurch gekennzeichnet, daß die magnetfelderzeugenden oder magnetfeldverändernden Mittel (30) an einem mit der Nachstelleinrichtung (5, 7) drehfest verbundenen Bauteil angeordnet sind.

## Claims

1. A brake operating arrangement having a device for adjusting a brake, in particular a vehicle brake, having the following features:
a) a brake lever is provided, which together with a brake shaft executes a pivoting movement about the axis of rotation of the brake shaft, which pivoting movement serves to actuate a brake in order to take up a brake release clearance for the purpose of bringing a brake lining nearer to a brake drum;
b) between the brake lever and the brake shaft there is provided an adjusting device with which the brake shaft is displaceable relative to the brake lever about the axis of rotation of the brake shaft, in order to maintain the brake release clearance as the brake lining wears,
c) the adjusting device is in the form of a gear comprising a worm gear arranged on the brake shaft to rotate with it and an endless screw located in engagement with the worm gear;
characterized by the following feature:
d) a signal generator (27, 31) with a displacement sensor (26, 30) is provided, which serves for sensing a measurement displacement (n) which is arranged to be produced by the adjusting device (5, 7), and generates a signal in dependence on the sensed measurement displacement (n).

2. An arrangement according to claim 1, characterized in that a component (20, 33) serving for generation of the measurement displacement (n) is provided, which is displaceable with the endless screw (7) associated with the adjusting device (5, 7).

3. An arrangement according to claim 2, characterized in that the component (20, 33) is arranged to be longitudinally displaceable with respect to the endless screw (7) and the measurement displacement (n) can be generated as a function of the displacement movement of the endless screw (7).

4. An arrangement according to at least one of the preceding claims 1 to 3, characterized by the following features:
a) the endless screw (7) is arranged in the brake lever (1) and has an extension (6) joined in one piece to the endless screw (7) or so as to rotate with it, which extends beyond the brake lever (1);
b) between the extension (6) and the component (20, 33) there is provided a transfer mechanism (18, 19) which serves to transfer the displacement movement of the endless screw (7) to the component (20, 33).

5. An arrangement according to claims 1 and 4, characterized in that the displacement sensor (26) of the signal generator (27) is in the form of a follower pin (26) which engages with a control cam (25) inclined to the displacement axis (24) of the component (20).

6. An arrangement according to claim 4, characterized in that the transfer mechanism (18, 19) is constituted by an internal thread (19) of the component (20, 33), which engages with an external thread (18) joined to the extension (6) so that they rotate together.

7. An arrangement according to claim 6, characterized in that the external thread (18) associated with the extension (6) is arranged on a bush (13) surrounding the extension (6) and connected to it so that they rotate together.

8. An arrangement according to claim 7, characterized in that a locking mechanism (14) effective between the bush (13) and the extension (6) is provided, with which the bush (13) and the extension (6) are arranged to be brought into arbitrary locked positions relative to one another.

9. An arrangement according to claim 1, characterized in that the adjusting device (5, 7) is provided with means (30) for generating a magnetic field or changing a magnetic field, the movement of which means relative to a signal generator (31) having a displacement sensor (32) in the form of a magnetic field sensor (32) is arranged to be detected as a measurement displacement (n).

10. An arrangement according to claim 9, characterized in that the means (30) for generating a magnetic field or changing a magnetic field are arranged on the extension (6) of the endless screw (7).

11. An arrangement according to claim 9, characterized in that the means (30) for generating a magnetic field or changing a magnetic field are arranged on a component connected to the adjusting device (5, 7) so that they rotate together.

## Revendications

1. Dispositif d'actionnement de frein comportant un dispositif de rattrapage de frein, en particulier d'un frein de véhicule, présentant les caractéristiques suivantes:
a) il est prévu un levier de frein qui, conjointement avec un arbre de frein, exécute autour de l'axe de rotation de ce dernier un mouvement de pivotement qui sert à actionner un frein pour surmonter un jeu entre les garnitures de frein, dans le but de rapprocher une garniture de frein contre un tambour de frein;
b) entre le levier de frein et l'arbre de frein est prévu un dispositif de rattrapage qui permet de régler l'arbre de frein par rapport au levier de frein autour de l'axe de rotation de l'arbre de frein, dans le but de maintenir le jeu entre les garnitures lorsque les garnitures de frein s'usent;
c) le dispositif de rattrapage est réalisé à la manière d'un engrenage constitué par une roue tangente agencée solidairement en rotation sur l'arbre de frein et par une vis tangente se trouvant en engagement avec ladite roue tangente;
caractérisé par la caractéristique suivante:
d) il est prévu un émetteur (27, 31) avec un détecteur de course (26, 30), qui sert à balayer une course de mesure (n) qui peut être engendrée avec le dispositif de rattrapage (5, 7) et engendre un signal en fonction de la course de mesure (n) balayée.

2. Dispositif selon la revendication 1, caractérisé en ce qu'un élément (20, 33) est prévu pour servir à engendrer la course de mesure (n), ledit élément pouvant être réglé avec la vis tangente (7) associée au dispositif de rattrapage (5, 7).

3. Dispositif selon la revendication 2, caractérisé en ce que l'élément (20, 33) est agencé en déplacement longitudinal par rapport à la vis tangente (7) et en ce que la course de mesure (n) peut être engendrée en fonction du mouvement de réglage de la vis tangente (7).

4. Dispositif selon l'une au moins des revendications précédentes 1 à 3, caractérisé par les caractéristiques suivantes:
a) la vis tangente (7) est agencée dans le levier de frein (1) et présente un prolongement réalisé d'une seule pièce ou relié solidairement en rotation avec la vis tangente (7), qui s'étend à l'extérieur du levier de frein (1);
b) entre le prolongement (6) et l'élément (20, 33) est prévu un mécanisme de transmission (18, 19) qui sert à la transmission du mouvement de réglage de la vis tangente (7) sur l'élément (20, 33).

5. Dispositif selon les revendications 1 et 4, caractérisé en ce que le détecteur de course (26) de l'émetteur (27) est réalisé sous la forme d'un palpeur (26) qui se trouve en engagement avec une came de commande (25) inclinée vers l'axe de déplacement (24) de l'élément (20).

6. Dispositif selon la revendication 4, caractérisé en ce que le mécanisme de transmission (18, 19) est formé par un taraudage (19) de l'élément (20, 33) qui se trouve en engagement avec un filetage (18) solidaire en rotation du prolongement (6).

7. Dispositif selon la revendication 6, caractérisé en ce que le filetage (18) associé au prolongement (6) est agencé sur une douille (13) entourant le prolongement (6) et reliée solidairement en rotation avec celui-ci.

8. Dispositif selon la revendication 7, caractérisé en ce qu'il est prévu un encliquetage (14) à crans agissant entre la douille (13) et le prolongement (6), par lequel la douille (13) et le prolongement (6) peuvent être amenés dans des positions d'encliquetage quelconques l'une par rapport à l'autre.

9. Dispositif selon la revendication 1, caractérisé en ce que le dispositif de rattrapage (5, 7) est pourvu de moyens (30) engendrant ou modifiant un champ magnétique, dont le mouvement par rapport à un émetteur (31) peut être enregistré sous la forme d'une course de mesure (n), avec un détecteur de course (32) réalisé sous la forme d'un détecteur de champ magnétique (32).

10. Dispositif selon la revendication 9, caractérisé en ce que les moyens (30) engendrant ou modifiant un champ magnétique sont agencés sur le prolongement (6) de la vis tangente (7).

11. Dispositif selon la revendication 9, caractérisé en ce que les moyens (30) engendrant ou modifiant un champ magnétique sont agencés sur un élément relié solidairement en rotation avec le dispositif de rattrapage (5, 7).
